# EUROPEAN PATENT SPECIFICATION

(11) **EP 1 628 025 B1**
(45) Date of publication and mention of the grant of the patent: **13.02.2008**
(21) Application number: 05254727.0
(22) Date of filing: 28.07.2005
(51) Int. Cl.: F16D 3/84

(54) **Constant velocity joint boot**
Dichtungs-Manschette einer homokinetischen Kupplung
Soufflet d étanchéité de joint homocinétique

(30) Priority: 18.08.2004 JP 2004238659
(43) Date of publication of application: 22.02.2006
(73) Proprietor: NTN Corporation, Osaka-shi, Osaka 550-0003 (JP)
(72) Inventor: Ishijima, Minoru c/o NTN Corporation, Shizuoka-ken (JP); Yamazaki, Kenta c/o NTN Corporation, Shizuoka-ken (JP)
(74) Representative: White, Duncan Rohan

(56) References cited:
- EP-A- 0 319 381
- EP-A- 0 431 675
- EP-A- 0 464 984
- DE-A1- 4 142 194
- US-A- 4 267 743
- US-A- 4 456 269
- US-A- 4 597 745
- US-A- 4 702 483

## Description

### BACKGROUND OF THE INVENTION

### 1. Field of the Invention

The present invention relates to boots for constant velocity joints primarily, but not in a restrictive sense, used in vehicles for transmitting torque between two rotary axes at an operating angle without any variation in angular velocity.

### 2. Description of the Related Art

Generally, constant velocity joint boots are provided for preventing grease leakage from inside and entrance of foreign matter, such as water, from outside so as to ensure smooth rotation and durability of the constant velocity joints. The boots are commonly made in the form of bellows. One problem with the bellows-like boots was that part of the bellows was readily pinched between the end face of the constant velocity joint outer ring and the shaft coupled to the joint when the shaft was angled relative to the outer ring, resulting in the short life of the boots.

Japanese Patent Laid-Open Publication No. 2000-337399 proposes one method of preventing the pinching problem and improving the ease of assembly of joint boots. The bellows have a sufficient length, and the outside diameter of the first fold of the bellows is smaller than the diameter of the adjacent large diameter part that is attached to the outer ring of the constant velocity joint. There is provided a relatively large difference between the outside diameter of the first fold and the adjacent inside diameter of the bellows.

This boot design for preventing the pinching problem is based on the consideration that the shaft will be angled only within the range of normal use, and it was not certain whether it could surely prevent the pinching problem of the bellows part even when the shaft was angled more than the expected maximum angle. The shaft may for example be angled more than the maximum necessary angle in use when assembling the constant velocity joint into the vehicle. Moreover, because of the restrictions on the dimensions of the bellows part, a large amount of time and work was necessary to precisely calculate out the correct dimensions of each boot that varies in size and assembling condition.

US-A-4702483 discloses a mechanical shaft joint boot having a bellows between a large diameter ring and a small-diameter ring. In order to prevent pinching of a trough of the bellows between a first trough and the shaft, a first crest of the bellows is formed after the first trough and a second trough is formed so as to have a smaller apical diameter than that of the first trough, and a circumferential convex strip is formed on the sidewardly inclined surface of the first crest on the inner side of the first trough and/ or on the respectively opposed inside surface of the second trough.

US-A-4597745 discloses a protective bellows for a homokinetic transmission joint of an automobile, which replaces the folds of the conventional joint with a bellows for a joint having a bowl element. The bellows including an active part constituted by two coaxial spherical segments.

Based on the foregoing, an object of the present invention is to provide a constant velocity joint boot designed to prevent the pinching of the bellows part in the process of assembling the boot in a vehicle.

A constant velocity joint boot according to an embodiment of the present invention comprises: a first part attached to an outer joint member of a constant velocity joint; a second part attached to a shaft connected to an inner joint member of the constant velocity joint; and a bellows part connecting the first and second parts and covering an operating part of the constant velocity joint, wherein abutment surfaces are provided on the first and second parts on the side of the operating part respectively such as to make contact with each other when the shaft is moved to a predetermined operating angle. When the shaft moves to the predetermined operating angle, the abutment surfaces on the first and second parts abut with each other and stop the shaft from moving further, thereby preventing the bellows part from being pinched.

The abutment surface may only be provided on the first part on the side of the operating part such as to make contact with the shaft when the shaft is moved to the predetermined operating angle.

A constant velocity joint boot according to another embodiment of the present invention comprises: a first part attached to a support member that supports an outer joint member of a constant velocity joint with a bearing interposed therebetween; a second part attached to a shaft connected to an inner joint member of the constant velocity joint with a bearing interposed therebetween; and a bellows part connecting the first part and the second part and covering an operating part of the constant velocity joint, wherein abutment surfaces are provided on the first part and the second part on the side of the operating part respectively such as to make contact with each other when the shaft is moved to a predetermined operating angle. When the shaft moves to the predetermined operating angle, the abutment surfaces on the first and second parts abut with each other and stop the shaft from moving further, thereby preventing the bellows part from being pinched. The bearings attached to the outer joint member and the shaft ensure smooth rotation of the shaft.

The abutment surfaces may be provided on the outer joint member and the second part on the side of the operating part respectively such as to make contact with each other.

Furthermore, a constant velocity joint boot according to other embodiment of the present invention comprises: a first part attached to a support member that supports an outer joint member of a constant velocity joint with a bearing interposed therebetween; a second part attached to a shaft connected to an inner joint member of the constant velocity joint with a bearing interposed therebetween; and a bellows part connecting the first part and the second part and covering an operating part of the constant velocity joint, wherein abutment surfaces are provided on the first and second parts and on the bellows part respectively such as to make contact with each other when the shaft is moved to a predetermined operating angle, and the bellows part is thickened in a portion where the abutment surface is provided.

The constant velocity joint of the invention can be installed between a steering gear and a shaft and/or between a shaft and a steering wheel. When the shaft moves to the predetermined operating angle, the abutment surfaces abut with each other and stop the shaft from moving further, thereby preventing the bellows part from being pinched.

According to the invention, when the shaft of the joint is moved to a predetermined operating angle, the abutment surfaces provided on the side of the operating part of the joint abut with each other and stop the shaft from moving further, thereby preventing the bellows part from being pinched. As the possibility of break of the bellows part is lower, grease leakage from inside of the operating part or entrance of water from outside is prevented, and the durability of the joint itself is improved. By setting the predetermined operating angle of the shaft such as to slightly exceed a maximum operating angle of the shaft in use, the pinching of the bellows part is prevented during assembly even when the shaft is moved to a larger operating angle than the maximum operating angle in use.

### BRIEF DESCRIPTION OF THE DRAWINGS

Fig. 1 is a cross-sectional view showing a first embodiment of a constant velocity joint boot according to the invention, which is part A of Fig. 3;
Fig. 2 is a partially cross-sectional view of the joint with an operating angle shown in Fig. 1;
Fig. 3 is a schematic diagram of a common steering device;
Fig. 4 is a partially cross-sectional view similar to Fig. 2, showing a second embodiment of the joint boot;
Fig. 5 is a partially cross-sectional view similar to Fig. 2, showing a third embodiment of the joint boot;
Fig. 6 is a partially cross-sectional view similar to Fig. 2, showing a fourth embodiment of the joint boot; and
Fig. 7 is a partially cross-sectional view similar to Fig. 2, showing a fifth embodiment of the joint boot.

### DETAILED DESCRIPTION OF THE PREFERRED EMBODIMENTS

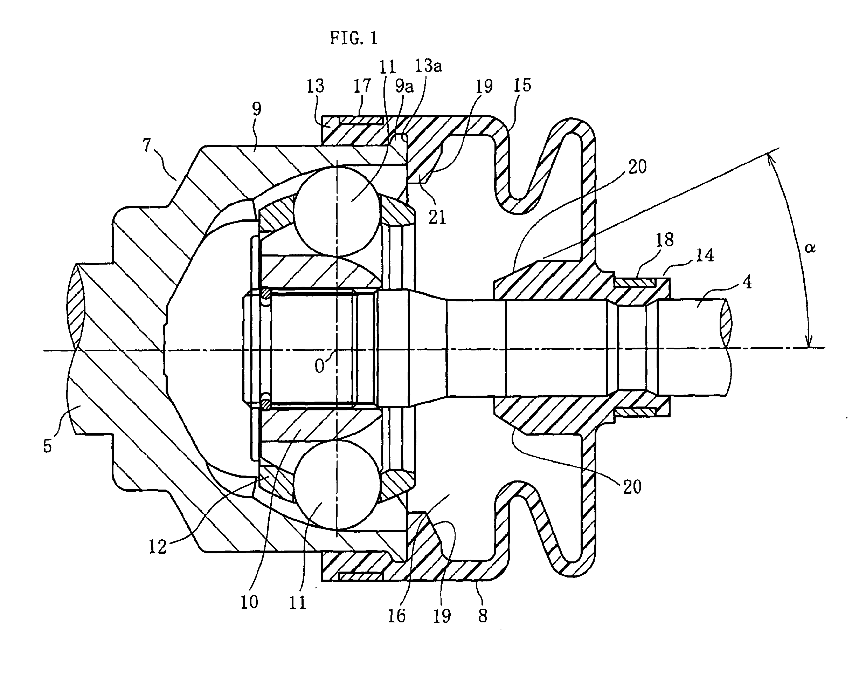

One embodiment of the present invention will now be described with reference to Fig. 1 to Fig. 3.

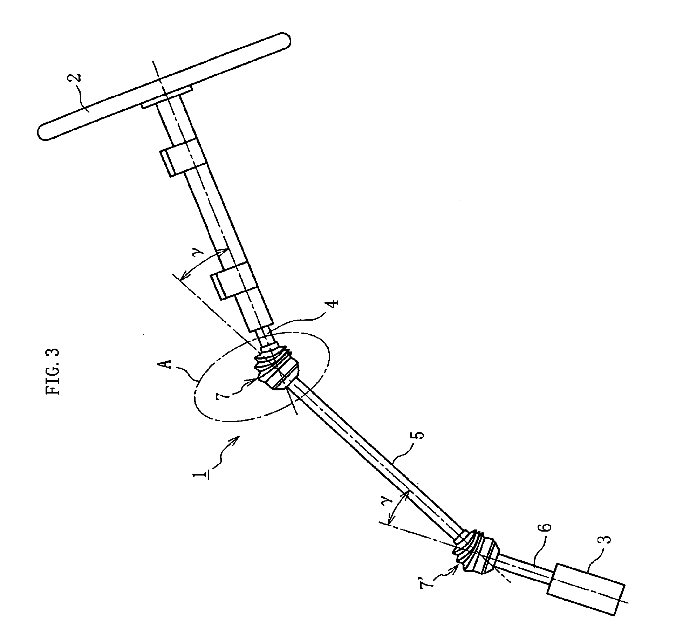

As shown in Fig. 3, the steering device 1 for automobiles or the like generally includes a plurality of shafts 4 to 6 between the steering wheel 2 and the steering gear 3 and is designed to transmit rotation torque from the steering wheel 2 to the steering gear 3 whose axial direction is different from that of the wheel. Constant velocity joints 7 and 7' are provided between the shaft 4 connected to the steering wheel 2 and the shaft 5, and between the shaft 5 and the shaft 6 connected to the steering gear 3.

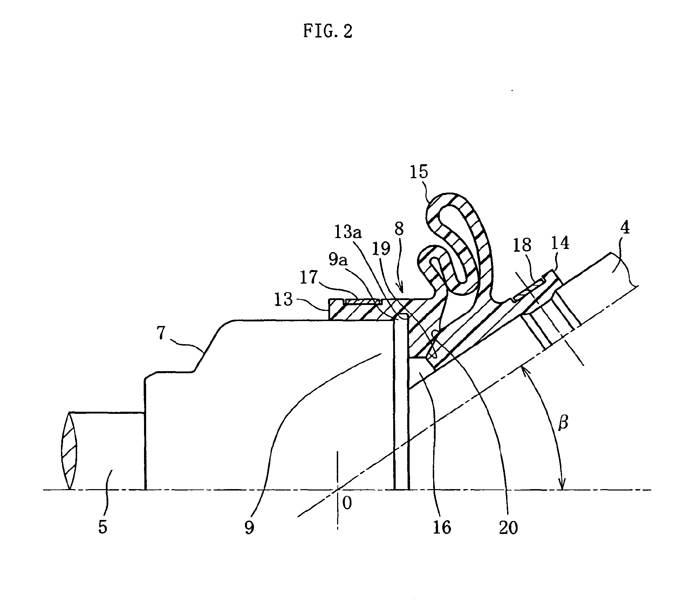

The basic structure of the constant velocity joint 7 for coupling the shaft with the steering wheel 2 and its boot 8 will be described with reference to Fig. 1 and Fig. 2. Fig. 1 illustrates a condition before the joint is assembled into a vehicle. The constant velocity joint 7 is made up of an outer joint member, i.e. an outer ring 9, including the shaft 5, an inner joint member, i.e. an inner ring 10 arranged inside the outer ring 9, balls 11 disposed between the inner ring 10 and the outer ring 9, a retainer 12 for holding the balls 11, the shaft 4 coupled to the inner ring 10, and the boot 8 attached at one end to the outer ring 9 and at the other end to the shaft 4.

While the shafts 4 and 5 are illustrated along the same line in Fig. 1, they will be angled to each other as shown in Fig. 3 when the steering device is assembled into the vehicle.

The boot 8 is made of a synthetic rubber or resin and formed of a first cylindrical part 13, a second cylindrical part 14, and a bellows part 15 connecting the two stationary parts 13 and 14. The space enclosed by the boot 8 and the inner surface of the outer ring 9 of the constant velocity joint 7 is defined as an operating part 16 in which the inner ring 10, the balls 11, and the stem of the shaft 4 are positioned, and filled with a lubricating grease. The boot 8 thus prevents entrance of foreign matter, such as water, from outside into the operating part 16 and leakage of the grease to the outside to maintain the operation of the constant velocity joint 7.

The first part 13 is mounted to the open end of the outer ring 9 of the constant velocity joint 7, being fixedly fastened to the outer periphery of the outer ring 9 using a clamp 17. The outer ring 9 includes an outwardly extending protrusion 9a at the open end edge, which fits into a corresponding groove 13a in the first part 13 for the retention of the first part 13. The second part 14 is fixedly fastened to the shaft 4 with a clamp 18.

The shaft 4 can move to a predetermined operating angle β around a point O. The angle β is an angle that is 1° to 15° more than the maximum operating angle γ of the shaft 4 in normal use. The shaft 4 can be moved freely in this angle range when the constant velocity joint 7 is assembled into the steering device 1.

The first and second parts 13 and 14 have abutment surfaces 19, 20, respectively, which make contact with each other when the shaft 4 is moved to the predetermined operating angle β. The abutment surface 19 is formed on a flange 21 extending radially inwardly toward the shaft such as to cover the corner of the outer ring 9. The abutment surface 19 faces the operating part 16. The flange 21 abuts the-end face of the outer ring 9, preventing the first part 13 from being fitted too far onto the outer ring 9.

The abutment surface 20 of the second part 14 is inclined at an angle α relative to the shaft axis. The angle α may preferably be up to 45°. As long as the inclination angle of the abutment surface 20 of the second part 14 is in this range, no large component of force is created in the direction in which the second part 14 is axially offset (lengthwise direction of the shaft 4) when the abutment surface 19 of the first part 13 makes contact with the abutment surface 20. Thus a situation is avoided where the second part 14 is displaced, leading to deterioration in the sealing properties.

As described above, the predetermined operating angle of the shaft 4 is set larger than the maximum necessary angle of the shaft 4 in use, so that the shaft 4 can freely move in a wider angle range during the assembly of the steering device 1. The assembling operation is thus made easier.

When the shaft 4 takes the predetermined operating angle, the abutment surfaces 19 and 20 make contact with each other and stop the shaft 4 from moving further (see Fig. 2), and prevent the bellows part 15 from being pinched. That is, the abutment surfaces 19 and 20 abut with each other before the bellows part 15 of the boot 8 are pinched. Thus the boot has improved reliability against fatigue failure of the boot 8 caused by pinching of the bellows part 15.

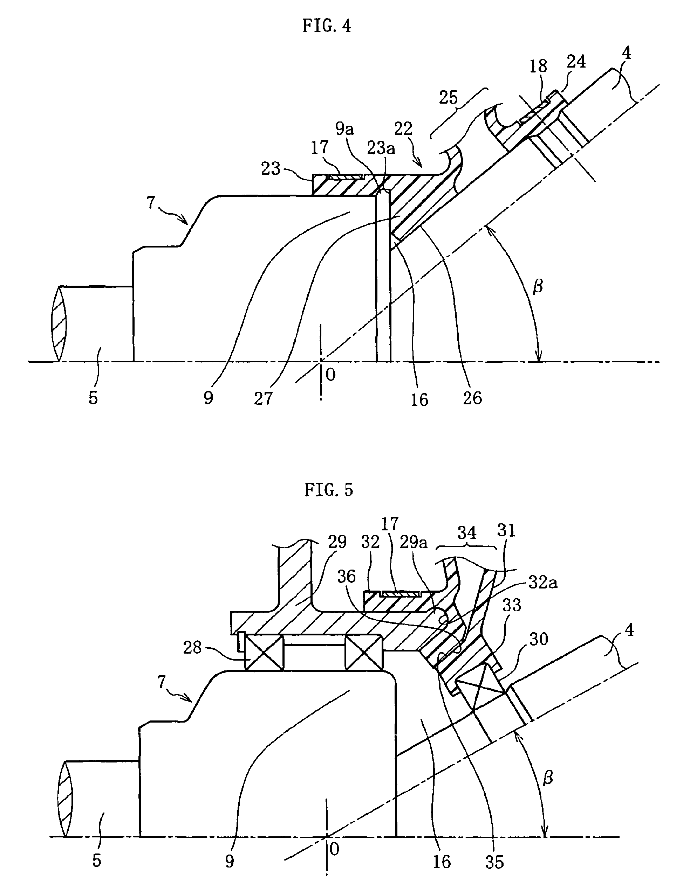

Next, a second embodiment of the constant velocity joint boot 22 will be described with reference to Fig. 4. Same elements as those of the foregoing embodiment are given the same reference numerals and will not be described in detail again.

The boot 22 is made up of a first cylindrical part 23, a second cylindrical part 24, and a bellows part 25 connecting the two parts 23 and 24. The first part 23 is mounted to the outer ring 9 of the constant velocity joint 7, being fixedly fastened to the outer periphery of the outer ring 9 using a clamp 17. The protrusion 9a on the outer ring 9 fits in the groove 23a in the first part 23. The second stationary part 24 is fixedly fastened to the shaft 4 with a clamp 18. The space enclosed by the bellows part 25 and the inner surface of the outer ring 9 is defined as an operating part 16, and filled with a lubricating grease.

The shaft 4 can move to a predetermined operating angle β around a point O. The angle β is an angle that is 1° to 15° more than the maximum operating angle γ of the shaft 4 in normal use, i.e., it is an angle range for the shaft 4 to move when the-constant velocity joint 7 is assembled into a vehicle, which is larger than the maximum necessary angle of the shaft 4 in use.

The first part 23 has an abutment surface 26 formed thereon on the side of the operating part 16 so that the surface 26 makes contact with the shaft 4 when the shaft 4 is moved to the predetermined operating angle β. The abutment surface 26 is formed on a flange 27 extending radially inwardly toward the shaft 4 such as to cover the corner of the outer ring 9. The flange 27 abuts the end face of the outer ring 9 preventing the first part 23 from being fitted too far onto the outer ring 9.

As described above, the boot 22 has the abutment surface 26 on the side of the operating part 16 defined by the outer ring 9 and the bellows part 25. When the angle of the shaft 4 exceeds a maximum necessary angle in use during assembly, the abutment surface 26 makes contact with the shaft 4 and stops the shaft 4 from moving further, thereby preventing the bellows part 25 from being pinched. Thus the boot 22 has improved reliability against fatigue failure caused by pinching of the bellows part.

Next, a third embodiment of the constant velocity joint boot will be described with reference to Fig. 5. Same elements as those of the foregoing embodiments are given the same reference numerals and will not be described in detail again.

The outer ring 9 of the constant velocity joint is attached to a support 29 through an antifriction bearing 28. The support 29 is attached to the vehicle body (not shown). Another antifriction bearings 30 is attached on the shaft 4, too. The boot 31 for covering the operating part 16 of the constant velocity joint is made up of a first cylindrical part 32, a second cylindrical part 33, and a bellows part 34 connecting the two parts 32 and 33. The space enclosed by the bellows part 34 and the inner surface of the outer ring 9 is defined as an operating part 16, and filled with a lubricating grease.

The first part 32 is mounted to the support 29, which is a non-rotating component, and is fixedly fastened to the outer periphery of the support 29 using a clamp 17. An outwardly extending protrusion 29a at the end of the support 29 fits in a groove 32a in the first part 32. The second part 33 is fitted on the bearing 30.

The shaft 4 can move to a predetermined operating angle β around a point O. The angle β is an angle that is 1° to 15° more than the maximum angle γ of the shaft in normal use. The shaft 4 can be moved freely in this angle range when the constant velocity joint is assembled into the vehicle. The maximum necessary angle γ in use is usually set 20° or more.

The first and second parts 32 and 33 have abutment surfaces 35 and 36, respectively, on the side of the operating part 16, which make contact with each other when the shaft 4 is moved to the predetermined operating angle β. The contact area between both the abutment surfaces 35 and 36 should preferably be within the thickness range of the bearing 30, so that no diagonal force is applied to the bearing 30 to prevent removal of the second part 33 from the bearing 30.

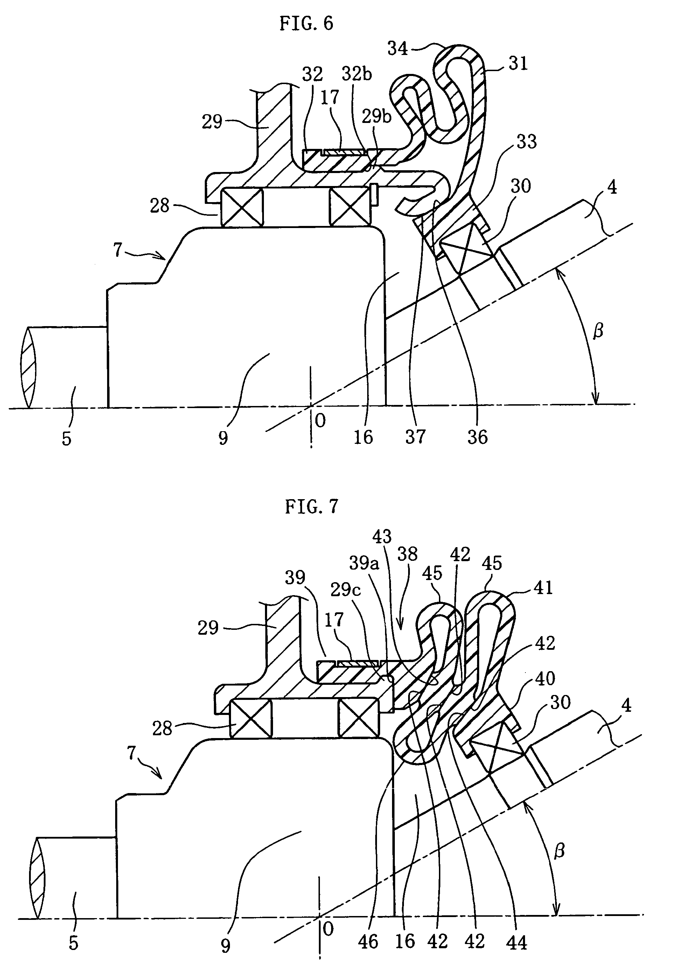

Fig. 6 shows a fourth embodiment in which an abutment surface 37 is formed on an extension of the support 29 toward the operating part 16, to make contact with the abutment surface 36 of the second part 33. The protrusion 29b is located inside the extension line of the end face of the outer ring 9 and in contact with a step 32b on the inner surface of the first part 32.

With the third and fourth embodiments, the abutment surfaces 35 and 36 or 36 and 37 for preventing the pinching of the bellows part are provided on the side of the operating part 16 of the boot 31, and therefore the bellows part is not affected by oil or contaminants that can be adhered on the bellows part depending on the position of installation. When the angle of the shaft 4 exceeds a maximum necessary angle in use during assembly, the abutment surfaces 35 and 36 or 36 and 37 make contact with each other and stop the shaft 4 from moving further, thereby preventing the bellows 34 from being pinched. Thus the boot 31 has improved reliability against fatigue failure caused by pinching of the bellows part.

Next, a fifth embodiment of the constant velocity joint boot is described with reference to Fig. 7. Same elements as those of the foregoing embodiments are given the same reference numerals and will not be described in detail again.

The boot 38 is made up of a first cylindrical part 39, a second cylindrical part 40, and a bellows part 41 connecting the two parts 39 and 40 and covering the operating part 16 of the constant velocity joint. The first part 39 is mounted to the support 29 and fixedly fastened to the outer periphery of the support 29 using a clamp 17. The support 29 includes a radially outwardly extending protrusion 29c at the end edge, which fits into a corresponding groove 39a in the first part 39 for the retention of the part 39. The second part 40 is fitted on the bearing 30. The space enclosed by the bellows part 41 and the inner surface of the outer ring 9 is defined as an operating part 16, and filled with a lubricating grease.

The shaft 4 can move to a predetermined operation angle β around a point O. The angle β is an angle that is 1° to 15° more than the maximum angle γ of the shaft in normal use, i.e., it is an angle range for the shaft 4 to move when the constant velocity joint 7 is assembled into the vehicle, which is larger than the maximum necessary angle in use.

The first and second parts 39 and 40 have abutment surfaces 43 and 44, respectively, on the side of the operating part 16. The bellows part 41 also has abutment surfaces 42 in thickened portions in the parts other than the hinged parts 45 and 46, such that they make contact with each other and with the abutment surfaces 43 and 44 when the shaft 4 is moved to the predetermined operating angle β.

The abutment surface 44 of the second part 40 is inclined by an angle up to 45°. This way, no large component of force is created in the direction in which the second part 40 is axially offset from the bearing 30 when the force of contact is applied, and thus the pinching of the bellows part 41 is prevented.

With the above boot 38 having the abutment surfaces 42, 43, and 44, because the abutment surfaces 42 are formed in the thick portions of the bellows part 41, the hinged parts 45 and 46, which are critical parts of the bellows part, are not subjected to stress and therefore are less susceptible to break even when oil or contaminants are adhered on the bellows part 41 during normal use after the boot is assembled into the vehicle. When the angle of the shaft 4 exceeds a maximum necessary angle in use during assembly, the abutment surfaces 42, 43 and 44 make contact with each other and stop the shaft 4 from moving further, thereby preventing the bellows part 41 from being pinched. Thus the boot 38 has improved reliability against fatigue failure caused by pinching of the bellows part.

While the above first to fifth embodiments are described with taking into consideration that the shaft may be moved to an exceedingly large angle during assembly, the predetermined operating angle may be set equal to the maximum operating angle of the shaft in use for preventing bellows part damage caused by a shaft movement to an excessively large angle during use after assembly. The abutment surfaces will abut each other at the set angle to prevent the pinching of the bellows part and protect the bellows part from stress and break.

Even when oil or contaminants are adhered on the bellows part during normal use after the boot is assembled into the vehicle, the bellows part are not subjected to stress because the abutment surface abuts on the shaft before the folded parts of the bellows part make contact with each other, and therefore the bellows part are less susceptible to break. Also, since the abutment surfaces are provided on the side of the operating part and they make contact with each other inside the boot, the hinged parts of the bellows part do not make contact with each other. Therefore, abrasion or fatigue break of the boot is less likely to occur, even with oil or contaminants adhered on the bellows part during normal use.

While the above embodiments have been described as examples used in a steering device, this is not a requirement and the invention can be applied to any other devices that use constant velocity joints with boots.

The invention can be applied to various types of constant velocity joints with boots, i.e., the invention should not be limited to a specific type of joint.

Each of the shafts 4 to 6 need not be continuous and may consist of discrete parts. Further, while the bearings are described as antifriction bearings, this is obviously not a requirement.

## Claims

1. A constant velocity joint boot (8) comprising:
a first part (13) attached to an outer joint member (9) of a constant velocity joint (7);
a second part (14) attached to a shaft (4) connected to an inner joint member (10) of the constant velocity joint (7); and
a bellows part (15) connecting the first part and the second part and covering an operating part (16) of the constant velocity joint (7), wherein
abutment surfaces (19, 20) are provided on the first part (13) and the second part (14) on the side of the operating part (16) respectively such as to make contact with each other when the shaft (14) is moved to a predetermined operating angle.

2. A constant velocity joint boot (22) comprising:
a first part (23) attached to an outer joint member (9) of a constant velocity joint (7);
a second part (24) attached to a shaft (4) connected to an inner joint member (10) of the constant velocity joint; and
a bellows part (25) connecting the first part (23) and the second part (24) and covering an operating part (16) of the constant velocity joint, wherein
an abutment surface (26) is provided on the first part on the side of the operating part (16) such as to make contact with the shaft (4) when the shaft (4) is moved to a predetermined operating angle.

3. A constant velocity joint boot (31) comprising:
a first part (32) attached to a support member (29) that supports an outer joint member (9) of a constant velocity joint (7) with a bearing (28) interposed therebetween;
a second part (23) attached to a shaft (4) connected to an inner joint member (10) of the constant velocity joint (7) with a bearing (30) interposed therebetween; and
a bellows part (34) connecting the first part (32) and the second part (33) and covering an operating part (16) of the constant velocity joint (7), wherein
abutment surfaces (35, 36) are provided on the first part (32) and the second part (33) on the side of the operating part (16) respectively such as to make contact with each other when the shaft (4) is moved to a predetermined operating angle.

4. A constant velocity joint boot comprising:
a first part (32) attached to a support member (29) that supports an outer joint member (9) of a constant velocity joint (7) with a bearing (28) interposed therebetween;
a second part (33) attached to a shaft (4) connected to an inner joint member (10) of the constant velocity joint(7) with a bearing (30) interposed therebetween; and
a bellows part (34) connecting the first part (32) and the second part (33) and covering an operating part (16) of the constant velocity joint (7), wherein
abutment surfaces (37, 36) are provided on support member (29) of the outer joint member (9) and on the second part (33) on the side of the operating part (16) respectively such as to make contact with each other when the shaft (4) is moved to a predetermined operating angel.

5. A constant velocity joint boot (38) comprising:
a first part (39) attached to a support member (29) that supports an outer joint member (9) of a constant velocity joint (7) with a bearing (28) interposed therebetween;
a second part (40) attached to a shaft connected to an inner joint member (10) of the constant velocity joint (7) with a bearing (30) interposed therebetween; and
a bellows part (41) connecting the first part (39) and the second part (40) and covering an operating part (16) of the constant velocity joint (7), wherein
abutment surfaces (43, 44, 42) are provided on the first and second parts (39, 40) and on the bellows part (41) respectively such as to make contact with each other when the shaft is moved to a predetermined operating angle, and
the bellows part (41) is thickened in a portion where the abutment surface (42) is provided.

6. A constant velocity joint boot according to any one of claims 1 to 5, wherein the predetermined operating angle of the shaft (4) is a maximum operating angle of the constant velocity joint (7) in use.

7. A constant velocity joint boot according to any one of claims 1 to 5, wherein the predetermined operating angle of the shaft (4) slightly exceeds a maximum operating angle of the constant velocity joint (7) in use.

8. A constant velocity joint boot according to claim 7, wherein the angle slightly exceeding a maximum operating angle of the shaft (4) in use is an angle that is 1° to 15° more than the maximum operating angle of the constant velocity joint (7) in use.

9. A constant velocity joint boot according to any one of claims 1, 3, and 4, wherein the abutment surface formed on the second part is inclined at an angle up to 45° relative to a central axis of the shaft (4).

10. A constant velocity joint boot according to any one of claims 1 to 9, wherein the constant velocity joint (7) is a constant velocity joint provided between a steering gear and the shaft (4) and/or between the shaft and a steering wheel.

## Patentansprüche

1. Dichtungsmanschette (8) eines homokinetischen Gelenkes, die aufweist:
ein erstes Teil (13), das an einem äußeren Gelenkelement (9) eines homokinetischen Gelenkes (7) befestigt ist;
ein zweites Teil (14), das an einer Welle (4) befestigt ist, die mit einem inneren Gelenkelement (10) des homokinetischen Gelenkes (7) verbunden ist; und
ein Balgteil (15), das das erste Teil und das zweite Teil verbindet und ein Arbeitsteil (16) des homokinetischen Gelenkes (7) abdeckt, wobei
Anschlagflächen (19, 20) am ersten Teil (13) und zweiten Teil (14) jeweils auf der Seite des Arbeitsteils (16) vorhanden sind, um beispielsweise einen Kontakt miteinander herzustellen, wenn die Welle (4) mit einem vorgegebenen Arbeitswinkel bewegt wird.

2. Dichtungsmanschette (22 eines homokinetischen Gelenkes, die aufweist:
ein erstes Teil (23), das an einem äußeren Gelenkelement (9) eines homokinetischen Gelenkes (7) befestigt ist;
ein zweites Teil (24), das an einer Welle (4) befestigt ist, die mit einem inneren Gelenkelement (10) des homokinetischen Gelenkes verbunden ist; und
ein Balgteil (25), das das erste Teil (23) und das zweite Teil (24) verbindet und ein Arbeitsteil (16) des homokinetischen Gelenkes abdeckt, wobei
eine Anschlagfläche (26) am ersten Teil auf der Seite des Arbeitsteils (16) vorhanden ist, um beispielsweise einen Kontakt mit der Welle (4) herzustellen, wenn die Welle (4) mit einem vorgegebenen Arbeitswinkel bewegt wird.

3. Dichtungsmanschette (31) eines homokinetischen Gelenkes, die aufweist:
ein erstes Teil (32), das an einem Trägerelement (29) befestigt ist, das ein äußeres Gelenkelement (9) eines homokinetischen Gelenkes (7) trägt, wobei ein Lager (28) dazwischen angeordnet ist;
ein zweites Teil (33), das an einer Welle (4) befestigt ist, die mit einem inneren Gelenkelement (10) des homokinetischen Gelenkes (7) verbunden ist, wobei ein Lager (30) dazwischen angeordnet ist; und
ein Balgteil (34), das das erste Teil (32) und das zweite Teil (33) verbindet und ein Arbeitsteil (16) des homokinetischen Gelenkes (7) abdeckt, wobei
Anschlagflächen (35, 36) am ersten Teil (32) und zweiten Teil (33) jeweils auf der Seite des Arbeitsteils (16) vorhanden sind, um beispielsweise einen Kontakt miteinander herzustellen, wenn die Welle (4) mit einem vorgegebenen Arbeitswinkel bewegt wird.

4. Dichtungsmanschette eines homokinetischen Gelenkes, die aufweist:
ein erstes Teil (32), das an einem Trägerelement (29) befestigt ist, das ein äußeres Gelenkelement (9) eines homokinetischen Gelenkes (7) trägt, wobei ein Lager (28) dazwischen angeordnet ist;
ein zweites Teil (33), das an einer Welle (4) befestigt ist, die mit einem inneren Gelenkelement (10) des homokinetischen Gelenkes (7) verbunden ist, wobei ein Lager (30) dazwischen angeordnet ist; und
ein Balgteil (34), das das erste Teil (32) und das zweite Teil (33) verbindet und ein Arbeitsteil (16) des homokinetischen Gelenkes (7) abdeckt, wobei
Anschlagflächen (37, 36) am Trägerelement (29) des äußeren Gelenkelementes (9) und am zweiten Teil (33) jeweils auf der Seite des Arbeitsteils (16) vorhanden sind, um einen Kontakt miteinander herzustellen, wenn die Welle (4) mit einem vorgegebenen Arbeitswinkel bewegt wird.

5. Dichtungsmanschette (38) eines homokinetischen Gelenkes, die aufweist:
ein erstes Teil (39), das an einem Trägerelement (29) befestigt ist, das ein äußeres Gelenkelement (9) eines homokinetischen Gelenkes (7) trägt, wobei ein Lager (28) dazwischen angeordnet ist;
ein zweites Teil (40), das an einer Welle befestigt ist, die mit einem inneren Gelenkelement (10) des homokinetischen Gelenkes (7) verbunden ist, wobei ein Lager (30) dazwischen angeordnet ist; und
ein Balgteil (41), das das erste Teil (39) und das zweite Teil (40) verbindet und ein Arbeitsteil (16) des homokinetischen Gelenkes (7) abdeckt, wobei
Anschlagflächen (43, 44, 42) am ersten und zweiten Teil (39, 40) und am Balgteil (41) jeweils vorhanden sind, um beispielsweise einen Kontakt miteinander herzustellen, wenn die Welle mit einem vorgegebenen Arbeitswinkel bewegt wird, und
das Balgteil (41) in einem Abschnitt dicker ist, wo die Anschlagfläche (42) vorhanden ist.

6. Dichtungsmanschette eines homokinetischen Gelenkes nach einem der Ansprüche 1 bis 5, bei der der vorgegebene Arbeitswinkel der Welle (4) ein maximaler Arbeitswinkel des homokinetischen Gelenkes (7) bei Benutzung ist.

7. Dichtungsmanschette eines homokinetischen Gelenkes nach einem der Ansprüche 1 bis 5, bei der der vorgegebene Arbeitswinkel der Welle (4) etwas einen maximalen Arbeitswinkel des homokinetischen Gelenkes (7) bei Benutzung übersteigt.

8. Dichtungsmanschette eines homokinetischen Gelenkes nach Anspruch 7, bei der der Winkel, der einen maximalen Arbeitswinkel der Welle (4) bei Benutzung etwas übersteigt, ein Winkel ist, der 1° bis 15° größer ist als der maximale Arbeitswinkel des homokinetischen Gelenkes (7) bei Benutzung.

9. Dichtungsmanschette eines homokinetischen Gelenkes nach einem der Ansprüche 1, 3 und 4, bei der die Anschlagfläche, die auf dem zweiten Teil gebildet wird, unter einem Winkel von bis zu 45° relativ zu einer Mittelachse der Welle (4) geneigt ist.

10. Dichtungsmanschette eines homokinetischen Gelenkes nach einem der Ansprüche 1 bis 9, bei der das homokinetische Gelenk (7) ein homokinetisches Gelenk ist, das zwischen einem Lenkgetriebe und der Welle (4) und/oder zwischen der Welle und einem Lenkrad bereitgestellt wird.

## Revendications

1. Fourreau de protection pour joint homocinétique (8) comprenant:
une première partie (13) fixée à un élément de joint extérieur (9) d'un joint homocinétique (7);
une seconde partie (14) fixée à un arbre (4) raccordé à un élément de joint intérieur (10) du joint homocinétique (7); et
une partie à soufflet (15) reliant la première partie et la seconde partie et recouvrant une partie pour fonctionnement (16) du joint homocinétique (7), dans lequel
des surfaces de butée (19, 20) sont prévues respectivement sur la première partie (13) et la seconde partie (14) du côté de la partie pour fonctionnement (16) de façon à réaliser un contact l'une avec l'autre lorsque l'arbre (4) est déplacé à un angle de fonctionnement prédéterminé.

2. Fourreau de protection pour joint homocinétique (22) comprenant:
une première partie (23) fixée à un élément de joint extérieur (9) d'un joint homocinétique (7);
une seconde partie (24) fixée à un arbre (4) raccordé à un élément de joint intérieur (10) du joint homocinétique; et
une partie à soufflet (25) reliant la première partie (23) et la seconde partie (24) et recouvrant une partie pour fonctionnement (16) du joint homocinétique, dans lequel
une surface de butée (26) est prévue sur la première partie sur le côté de la partie pour fonctionnement (16) de façon à réaliser un contact avec l'arbre (4) lorsque l'arbre (4) est déplacé à un angle de fonctionnement prédéterminé.

3. Fourreau de protection pour joint homocinétique (31) comprenant:
une première partie (32) fixée à un élément de support (29) qui supporte un élément de joint extérieur (9) d'un joint homocinétique (7) avec un palier (28) interposé entre eux;
une seconde partie (33) fixée à un arbre (4) raccordé à un élément de joint intérieur (10) du joint homocinétique (7) avec un palier (30) interposé entre eux; et
une partie à soufflet (34) reliant la première partie (32) et la seconde partie (33) et recouvrant une partie pour fonctionnement (16) du joint homocinétique (7), dans lequel
des surfaces de butée (35, 36) sont prévues respectivement sur la première partie (32) et la seconde partie (33) sur le côté de la partie pour fonctionnement (16) de façon à réaliser un contact l'une avec l'autre lorsque l'arbre (4) est déplacé à un angle de fonctionnement prédéterminé.

4. Fourreau de protection pour joint homocinétique comprenant:
une première partie (32) fixée à un élément de support (29) qui supporte un élément de joint extérieur (9) d'un joint homocinétique (7) avec un palier (28) interposé entre eux;
une seconde partie (33) fixée à un arbre (4) raccordé à un élément de joint intérieur (10) du joint homocinétique (7) avec un palier (30) interposé entre eux; et
une partie à soufflet (34) reliant la première partie (32) et la seconde partie (33) et recouvrant une partie pour fonctionnement (16) du joint homocinétique (7), dans lequel
des surfaces de butée (37, 36) sont prévues respectivement sur l'élément de support (29) de l'élément de joint extérieur (9) et sur la seconde partie (33) sur le côté de la partie pour fonctionnement (16) de façon à réaliser un contact l'une avec l'autre lorsque l'arbre (4) est déplacé à un angle de fonctionnement prédéterminé.

5. Fourreau de protection pour joint homocinétique (38) comprenant:
une première partie (39) fixée à un élément de support (29) qui supporte un élément de joint extérieur (9) d'un joint homocinétique (7) avec un palier (28) interposé entre eux;
une seconde partie (40) fixée à un arbre raccordé à un élément de joint intérieur (10) du joint homocinétique (7) avec un palier (30) interposé entre eux; et
une partie à soufflet (41) reliant la première partie (39) et la seconde partie (40) et recouvrant une partie pour fonctionnement (16) du joint homocinétique (7), dans lequel
des surfaces de butée (43, 44, 42) sont prévues respectivement sur les première et seconde parties (39, 40) et sur la partie à soufflet (41) de façon à réaliser un contact les unes avec les autres lorsque l'arbre est déplacé à un angle de fonctionnement prédéterminé, et
la partie à soufflet (41) est épaissie dans une partie où la surface de butée (42) est prévue.

6. Fourreau de protection pour joint homocinétique selon l'une quelconque des revendications 1 à 5,
dans lequel l'angle de fonctionnement prédéterminé de l'arbre (4) est un angle de fonctionnement maximal du joint homocinétique (7) en service.

7. Fourreau de protection pour joint homocinétique selon l'une quelconque des revendications 1 à 5,
dans lequel l'angle de fonctionnement prédéterminé de l'arbre (4) dépasse légèrement un angle de fonctionnement maximal du joint homocinétique (7) en service.

8. Fourreau de protection pour joint homocinétique selon la revendication 7, dans lequel l'angle dépassant légèrement un angle de fonctionnement maximal de l'arbre (4) en service est un angle qui est de 1° à 15° supérieur à l'angle de fonctionnement maximal du joint homocinétique (7) en service.

9. Fourreau de protection pour joint homocinétique selon l'une quelconque des revendications 1, 3 et 4, dans lequel la surface de butée formée sur la seconde partie est inclinée à un angle pouvant être égal à 45° par rapport à un axe central de l'arbre (4).

10. Fourreau de protection pour joint homocinétique selon l'une quelconque des revendications 1 à 9, dans lequel le joint homocinétique (7) est un joint homocinétique prévu entre un boîtier de direction et l'arbre (4) et/ou entre l'arbre et un volant de direction.
